# EUROPEAN PATENT APPLICATION

(11) **EP 4 006 859 A1**
(43) Date of publication of application: **01.06.2022**
(21) Application number: 21209953.5
(22) Date of filing: 23.11.2021
(51) Int. Cl.: G08B 19/00, H04L 12/28

(54) **AN ALARM DETECTION AND PROTECTION SYSTEM**

(30) Priority: 26.11.2020 IT 202000028493
(71) Applicant: SV Sistemi di Sicurezza S.r.l., 24050 Grassobbio, Bergamo (IT)
(72) Inventor: POLGE, Vincenzo, 24124 BERGAMO (IT)
(74) Representative: Penza, Giancarlo

(57) **Abstract**

An alarm detection and protection system comprises a processing station (10) comprising a control unit (11); one or more printed circuit boards (30) controlled by the control unit (11) and a detection station (20) that is remote with respect to the processing station (10) and comprising in turn at least one acquisition device (40) and an actuation device (50) that are connected to the control unit (11) by the one or more printed circuit boards (30). At least one of the printed circuit boards (30) is installed at the detection station (20).

## Description

### FIELD OF APPLICATION

The present invention relates to the technical sector of control and monitoring.

In particular, the object of this invention is a detection and protection system for alarms caused by fires, gas leaks, anomalous situations in controlled environments or the like.

### PRIOR ART

Continuous technological progress has over the years enabled systems to be developed with which it is possible to detect and analyse an ever greater amount of parameters, which can be exploited with great efficiency to identify promptly potentially harmful or hazardous situations for people or things that are inside an area that it is desired to monitor.

In particular, alarm detection and protection systems are known that comprise a plurality of sensors that detect specific environmental parameters and which activate suitable actuators that enable a quick and prompt response to be provided to a potentially hazardous situation as it arises.

By way of example, such actuators could comprise acoustic and/or optical signalling devices that are useful for alerting the people present in the monitored area to the danger situation or devices that are able to minimize, or even neutralize, the hazard situation, for example dispensers of a firefighting plant.

Operation of the sensors, processing information received from the sensors and possible activation of suitable actuators are controlled by a processing station comprising a control unit (such as for example a CPU), with which all the elements that make up the system are interfaced by an input/output printed circuit board.

In known systems, the processing station thus comprises both the control unit and one or more printed circuit boards that are in turn connected by wiring dedicated to respective sensor/actuator units located remotely inside the area to be monitored.

In this manner, it is possible to dispose of a central processing station to which all the data are conveyed that are collected by the various sensors (placed in communication with the control unit by the respective printed circuit boards).

Nevertheless, known systems are beset by considerable drawbacks that make implementation extremely complex and onerous and accordingly the need is very keenly felt in the sector to develop new solutions that enable exploitability thereof, particularly relative to installation procedures, to be improved.

In fact, in order to be able to work efficiently (or simply for systems that have to operate on a large scale) each electronic printed circuit board has to be connected to a considerable number of actuators and sensors and/or to actuators and sensors installed at a great reciprocal distance and relative to the processing station.

In this context, each sensor/actuator has to be individually connected to the respective printed circuit board, thus making it necessary to purchase and install an extremely high quantity of cables both in terms of number and size of the cables, making this type of system extremely costly and also requiring a long time to install the cables.

One object of the present invention is thus to provide an alarm detection and protection system that is able to overcome or at least alleviate known drawbacks.

A particular object of the present invention is to provide an alarm detection and protection system that minimizes installation costs and the structural complexity of the system, at the same time maintaining high standards of reliability and toughness.

### SUMMARY OF THE INVENTION

These and other objects are still reached by an alarm detection and protection system according to the description in the appended claims The alarm detection and protection system described here achieves the following technical effects:
- reduced structural complexity;
- reduced installation time;
- reduced manufacturing costs.

These and other technical effects of the invention will be highlighted in more detail by the following description of embodiments shown by way of a non-limitative example with reference to the attached drawings.

### BRIEF DESCRIPTION OF THE DRAWINGS

Fig. 1 is a general block diagram of the system.
Figs 2, 3, 4 are block diagrams that show in detail some components of the diagram of figure 1.

### DETAILED DESCRIPTION

In the appended figures, the numerical reference 1 indicates in general an alarm detection and protection system, which will be referred to below in the present description simply as system 1.

The system 1 comprises a processing station 10, at least one remote detection station 20 communicating data with the processing station 10, and one or more printed circuit boards configured to make the various stations 10, 20 interface with each other.

In particular, as will be explored in more detail below, at least one printed circuit board 30 is installed at a respective remote detection station 20.

In other words, at least one printed circuit board 30 is installed remotely with respect to the processing station 10.

In more detail, the processing station 10 comprises a control unit 11 connected to the printed circuit boards 30 and configured to control the operation thereof.

The control unit 11 comprises at least one processor (such as for example a CPU).

Typically, the control unit 11 comprises two processors operationally connected by a BUS communication channel of CAN type, preferably redundant.

The control unit 11 is configured to make the secondary processor perform each operation performed by the primary processor.

In particular, the secondary processor performs the same logics as the primary processor, but does not perform activations.

The technical effect achieved is that in a fault condition of the primary processor, the control unit 11 operates by executing instructions from the secondary processor.

Preferably, the two processors are in master-slave configuration in which the primary processor performs the master function.

In general, it should be noted that in the present context the control units 11 are described as being divided into distinct functional modules (storage modules or operative modules) for the sole purpose of describing clearly and completely the functionalities of the processing units 11 themselves. Operationally, these control units 11 can also consist of a single electronic device, appropriately programmed to perform the functionalities described, and the different modules can correspond to hardware entities and/or software routines that are part of the programmed device.

Alternatively, or in addition, these functions can be performed by a plurality of electronic devices over which the aforesaid functional modules can be distributed.

The control unit 11 can moreover rely on one or more processors to execute the instructions contained in the memory modules.

The processing station 10 further comprises a graphic interface 17 for a communication with a system operator.

In particular, this graphic interface 17 is provided with a dedicated display for each electronic printed circuit board 30 that permits a display of the states of each channel and of parameters representing the operation of the printed circuit board, like one or more of electric, temperature and humidity parameters, versions of the firmware.

The graphic interface 17 is further provided with a display for the control unit 11 for a general display and storage of the events, as well as for control and programming operations.

Advantageously, also each detection station 20 can comprise a graphic interface 17 configured in particular to display parameters representative of the operation of the printed circuit board(s) 30 associated with the detection station 20

The technical effect achieved by the use of this interface is the simplification of maintenance tasks and the remedying of malfunctions, and greater rapidity in the intervention procedures in the event of an alarm.

The processing station 10 can be located inside a building for the centralized control of events, whereas the remote detection station 20 is located "on site", i.e. in environments in which the events may occur, which may also be at a great distance from the place in which the processing station 10 is installed.

The term "events" shall mean in the course of the description any situation that requires an intervention to restore safety conditions.

For example, events can be: fires, gas leaks, overheating, floods, sparks, variations in process variables.

Structurally, the remote detection station 20 comprises at least one acquisition device 40, which is connected to the control unit 11 of the processing station 10 by one of the printed circuit boards 30.

The acquisition device 40 is configured to detect parameters representative of an alarm situation.

In particular, the acquisition device 40 can detect the presence of a fire or a gas leak, of an increase in the concentration of harmful substances in a controlled atmosphere or any further parameter indicating a possible emergency situation.

The system 1 further comprises at least one actuation device 50, which is also connected to the control unit 11 by a printed circuit board 30 (the same as or a different one from the one to which the acquisition device 40 is connected).

The actuation device 50 is configured to actuate a reaction to a detected alarm situation.

In particular, the actuation device 50 can be a device that dispenses an extinguishing agent, a device for controlling indoor ventilation in the event of gas leaks, a system of acoustic optical warning devices or the like.

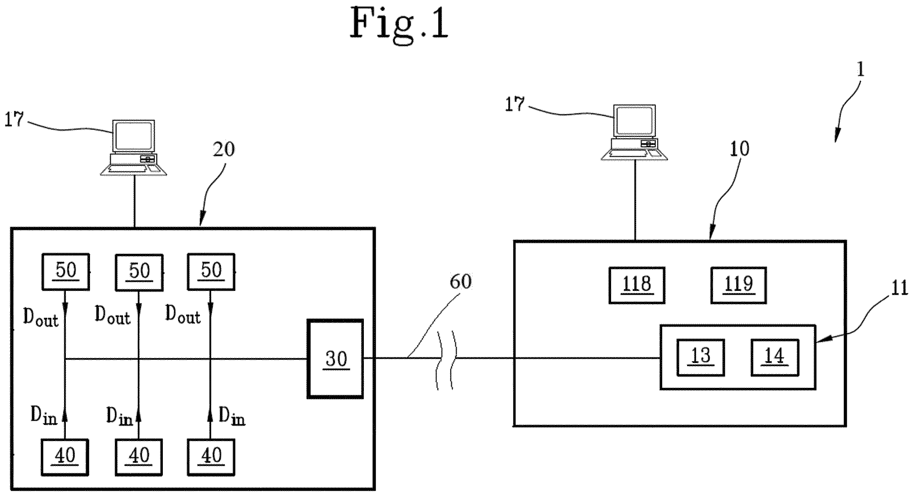

As shown in figure 1, each printed circuit board 30 achieves a connection of the processing station 10 with the control devices 40 and/or with the actuation devices 50.

In particular, in figure 1 a single printed circuit board 30 is shown that is connected to all the acquisition devices 40 and to all the actuation devices 50, but it would also be possible to install a greater number of printed circuit boards 30, each coupled with a respective group of devices or single devices.

Operationally, the printed circuit boards 30 are adapted to receive detection data Din from the acquisition devices 40.

In other words, the acquisition devices 40 detect an alarm situation such as for example, a fire situation, and transmit to the printed circuit board 30 to which they are connected data Din that are representative of the detected anomaly, so that the latter can be managed by the system 1. Advantageously, at least one printed circuit board 30 is installed at the detection station 20.

Preferably, all the printed circuit boards 30 of the system are installed at the detection station 20 (of the same detection station 20 or of respective detection stations 20).

In other words, the system 1 comprises a central processing station 10 connected by printed circuit boards 30 to remote detection stations 20 that can receive data and information on the conditions of the environment that it is wished to monitor.

Alternatively, if there is interest in also monitoring an environment located in the vicinity of the processing station 10, it is possible to set up a plurality of printed circuit boards 30, at least one of which is installed at the processing station 10.

In particular, the printed circuit board 30 installed at the processing station 10 has the same features as and is coupled with the processing station 10 according to the same methods and with the same structural and functional arrangements that will be discussed below in relation to the coupling/interaction between the printed circuit boards 30 and the detection stations 20.

In this context, the processing station 10 comprises at least one acquisition device 40 and at least one actuation device 50 that operate in a similar manner to that of the corresponding devices included in the detection stations 20 and that are interfaced with the control unit 11 via the aforesaid printed circuit board 30 installed at the processing station 10.

In general, however, at least one printed circuit board 30 is in each case installed at the remote detection station 20 to collect all the information that it is able to acquire before sending it to the central processing station 10.

In this manner, it is possible to decrease significantly the wiring necessary for installing the system 1.

In fact, the at least one printed circuit board 30 is installed in the vicinity of all the peripherals of the detection station 20 that have to be interfaced with the processing station and it is accordingly possible to limit significantly the length of the connection cables whereas it will be sufficient to set up a single communication channel of great length to connect each printed circuit board 30 to the respective processing station 10.

The technical advantage obtained is that of reducing the overall costs of the components necessary for installing the system and the structural complexity thereof.

Preferably, the at least one printed circuit board 30 is integrated inside the detection station 20, in this manner the distance between the two and the printed circuit board 30 is protected inside the detection station 20.

For this purpose, the detection station 20 can comprise a cabinet provided with a plurality of housings configured to receive one or more printed circuit boards 30.

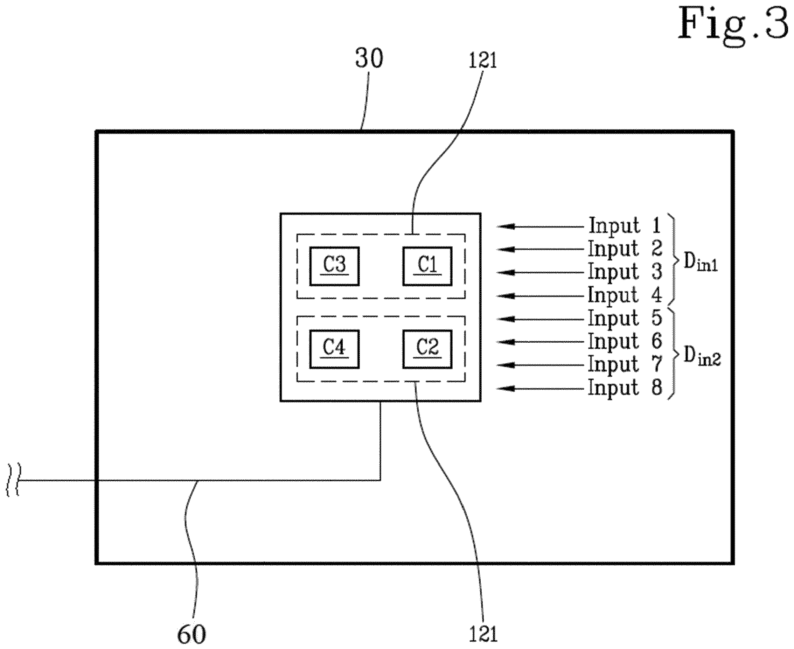

In order to ensure the correct operation of the system and the correct transmission of data between the stations 10, 20, with particular reference to figure 3, the printed circuit boards 30 can comprise at least one channel management module 121 configured to verify the integrity of the channels on which the detection data Din coming from at least one acquisition device 40 travel.

The channel management module 121 is further configured to activate a new channel to replace the verified channel, in the event of a verified channel malfunction.

The channel management module 121 comprises a main group of channels C1, C2 configured to receive a plurality of detection data Din1, Din2 from said at least one acquisition device 40.

The channel management module 121 further comprises a second group of channels C3, C4 configured to replace the respective channels of the main group C1, C2, in the event of a malfunction of a channel of the main group.

The channel management module 121 further comprises a memory module configured to map the channels of the main group of channels C1, C2 with the channels of the secondary group of channels C3, C4.

In other words, between the main and secondary channels, a two-way correspondence is established and the channel management module is able to select a predefined new track, once a non-functioning track in a circuit of the printed circuit board is detected.

The verification of the channels is performed on the channels entering the printed circuit boards.

Optionally, a similar verification could be performed also on the outlet channels from the printed circuit boards 30.

The technical effect achieved is an increase in the MTBF (Mean Time Between Failure); this is a result of the replacement almost in real time of a faulty channel that is not detected by the system and does not produce results on the system.

In other words, the reaction and repair of the malfunction are almost instantaneous.

One connected direct advantage is that these printed circuit boards are usable in critical applications in which uninterrupted operation of the detection and protection system is required, such as turbines, oil &gas plants, storage plants, etc.

More in detail, the communication of data between the processing station 10 and the detection station 20 (i.e. between the processing station and the at least one printed circuit board 30 associated with the detection station 20) is performed by a communication channel of CAN bus type 60 and/or by an optic fibre communication channel.

In other words, the transmission of data between the processing station 10 and the remote detection station 20 can be performed by a communication channel made by a bus 60 of CAN type, or by optic fibre, or by both, i.e. two distinct independent communication channels are present (thus one is redundant with respect to the other) so as to ensure information transmission also in the event of one of the channels becoming faulty. More in detail, a bus of CAN type enables data transmission to be obtained from and to the remote detection station 20 at transmission frequencies up to 1Mbit/s.

This permits high performance in identifying and limiting errors, reduced system device design time, lower connection costs, and greater reliability because of the fewer connections required.

More precisely, the features and main technical effects of CAN bus will now be described that are exploited by the system 1.

The CAN (Control Area Network) bus defines the Data Link layer of the ISO/OSI system, whereas the ISO 11898 standard defines the physical level.

The CAN (Control Area Network) is a serial bus system specifically indicated for being able to interface both with smart devices and sensors and actuators in order to be able to develop in real time a network that is reliable and able to work in heavy duty conditions, in particular in the automation sectors.

The CAN bus is a Multi-Master system; in other words, this means that any node can transmit data and that several nodes can request the bus simultaneously.

The nodes can be represented by the printed circuit boards 30.

The bus CAN covers the data link layers and physical layers of the ISO/OSI model and can operate at a speed of 1 Mbit/sec.

Messages of data transmitted by a node of a CAN bus do not contain addresses of the transmitting nodes or of other nodes indicated as receiving nodes.

The content of the message is on the other hand marked by an identifier that is unique for the entire network.

All the other nodes in the network receive the message and each node performs an acceptability verification of the identifier to determine whether the message, and thus the content thereof, is pertinent.

If the message is pertinent, it is processed, otherwise, it is ignored.

The unique identifier also determines the priority of the message; the lower the numeric value of the identifier, the higher the priority.

If two or more nodes attempt to transmit at the same time, a message arbitration ensures that the messages are transmitted by order of priority and that no message is lost.

Communication between the various nodes occurs via transmission of frames that can be of four types:
- Data frame: contains the data that the node intends to transmit; they can have two formats, basic (11 identification bits) and extended (29bit identification bits).

The CAN standard must of necessity recognize the basic frame format and may optionally recognize the extended frame format (which, however, has to be tolerated).

The basic CAN permits 211 = 2048 types of different message.

In the extended version, there can be up to 229 = 536 870 912 types of message.
- Remote frame: requires transmission by a determined identifier.
- Error frame: is sent by any node that has detected an error.
- Overload frame: introduces a delay between the data frame and/or remote frame

The CAN protocol supports transmission rates up to 1Mbit/s, this enables many types of peripheral to be managed in real time.

As the clock is not transmitted together with the data line, the receiving node synchronizes its inner clock with the clock of the transmitting node. The frequency at which the various nodes transmit can also be lower than 1Mbit/s but it is fixed in each mode and is general known *a priori.*

The technical effects of the CAN bus system that have led to the success of this technology are:
- Reliability: the CAN bus protocol has great ability to identify errors owing to 5 detection techniques (CRC etc).

The CAN bus, in fact, comprises a dedicated controller adapted to detect and process errors on a statistical base so as to perform processing that is as correct as possible.

This CAN controller can further disconnect the node that produces errors, guaranteeing to the entire system a high degree of error limitation.

In other words, the dedicated controller is adapted to decide the insulation of a printed circuit board 30 from the system 1 if this printed circuit board 30 is potentially harmful to safeguarding the integrity of the system. • Flexibility: the CAN bus protocol enables new purely receiving nodes to be added without any need to modify programmes.

In other words, a new printed circuit board can be added without modifying the structure of the system. • Constructional simplicity: the CAN bus basically consists of a twisted pair.

Further, as it is possible to add new nodes at any moment, this system is distinguished by a significant flexibility even during wiring. • Design simplicity: the design time of a CAN bus system is decidedly reduced as the spread of this technology has led many manufacturers to develop a high number of hardware and software solutions.

This translates into a significant reduction in costs.

According to one possible embodiment, if a plurality of printed circuit boards 30 are present, it is further possible to place them reciprocally in data communication so as to be able to optimize further the wiring of the system 1.

In fact, it is possible to connect a printed circuit board 30 to the processing station 10 through a further printed circuit board 30.

Accordingly, if both printed circuit boards 30 are installed at respective remote detection stations 20 with respect to the processing station 10, but reciprocally near, it is not necessary to install cables of significant length to connect individually each electronic printed circuit board 30 to the processing station 10, but it is on the other hand sufficient to install a single connecting cable between the processing station 10 and just one of the printed circuit boards 30, which will then be further connected also to the other printed circuit board 30 with a cable of lesser length, thus reducing the total length of the cables that it is necessary to lay.

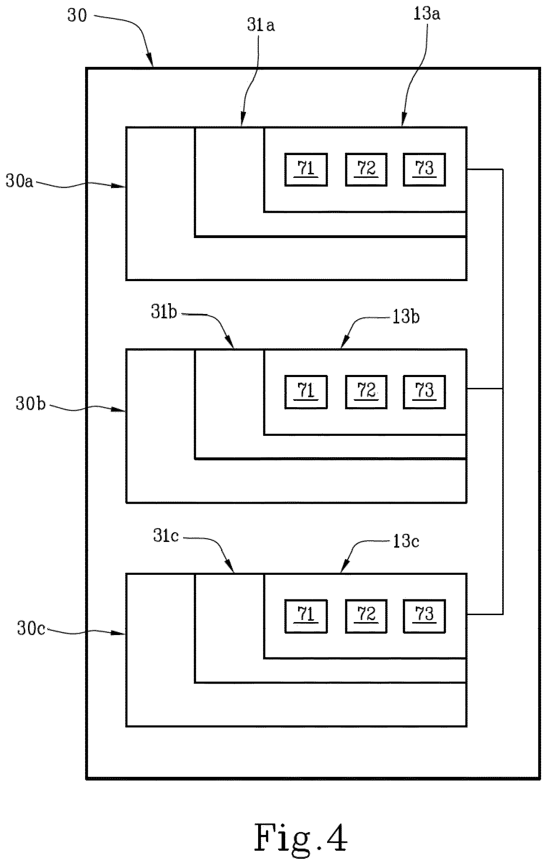

Further, with reference to figure 4 in which a system 1 is illustrated by way of example comprising three printed circuit boards 30 (at least one of which installed at a respective detection station 20), each printed circuit board 30a, 30b, 30c can comprise a respective local analysis unit 31a, 31b, 31c.

Each local analysis unit 31a, 31b, 31c is provided with a safety module 13a, 13b, 13c.

The safety module 13a is connected to the corresponding safety modules 13b, 13c of the local analyses units 31b, 31c of the two further printed circuit boards 30b, 30c.

The safety module 13a is adapted to verify the operation of the two further printed circuit boards 30b, 30c.

The safety module 13a, 13b, 13c comprises:
- a transmitting module for transmitting test data 70 towards a further printed circuit board 30b, 30c;
- a reception module for receiving response data 71 from the further printed circuit board 30b, 30c;
- a memory module 72 comprising data representative of the operation of a printed circuit board 30a, 30b, 30c;
- a comparison module 73 configured to compare the response data 71 with the operating data of the memory module 72.

The technical effect achieved by this crossed control is the distribution of the safety control functions of some printed circuit boards of the system.

In other words, each printed circuit board 30 belonging to the system 1 is interfaceable with other printed circuit boards 30, in particular by the respective local analysis unit, to verify the correct operation thereof.

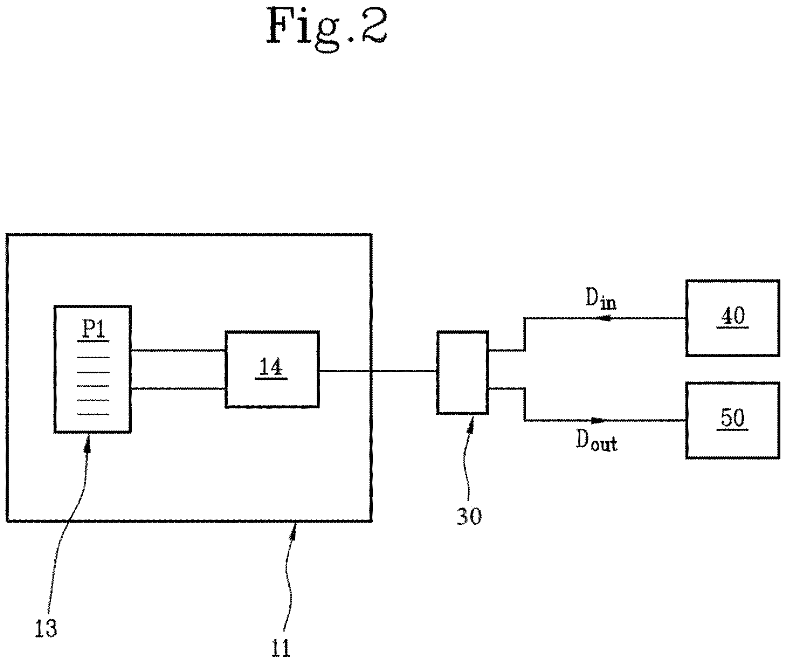

With particular reference to figure 2, the control unit 11 can further comprise a memory module 13 comprising, in turn, parameters P1 representative of detectable anomalies.

The control unit 11 further comprises an intervention module 14 configured to transmit to the memory module 13 data Din received from a printed circuit board 30, and to transmit data Dout representative of reactions to the detected anomalies.

In other words, the control unit 11 is configured to:
- receive detection data Din from the at least one acquisition device 40 through a printed circuit board 30;
- process actuation data Dout as a function of the detection data Din received;
- transmit the actuation data Dout to the at least one actuation device 50 through one or more printed circuit boards 30.

The intervention module 14 is on the other hand configured to:
- receive the values Din representative of an anomaly detected;
- compare the values Din received with the parameters P1 representative of detectable anomalies;
- transmit values Dout representative of reactions to the detected anomalies.

The control unit 11 can further comprise a mapping module for mapping printed circuit boards 118 (fig.1) that is configured to map the printed circuit boards 12.

The mapping module for mapping printed circuit boards 118 comprises:
- a register comprising parameters identifying the acquisition devices 40;
- a register comprising parameters identifying the actuation devices 50;
- a register comprising parameters identifying the printed circuit boards 30.

The mapping module for mapping printed circuit boards 118 further comprises a correspondence table for mapping the acquisition devices 40 and/or the actuation devices 50 on one or more of the printed circuit boards 30.

The control unit 11 comprises an integrity module 119, connected to the mapping module for mapping printed circuit boards 118.

The integrity module 119 is configured to:
- read from the mapping module for mapping printed circuit boards 118 the identifiers of the printed circuit boards in the system;
- verify the presence of a printed circuit board 30 in the system 1 through the identifier thereof..

The integrity module 119 is further configured to:
- in the event of the absence of a printed circuit board 30 request from the mapping module for mapping printed circuit boards 118 the identifiers of the acquisition devices 40 and/or the mapped actuation devices 50 with the identifier of the missing printed circuit board;
- wait for a new printed circuit board 30 to be inserted;
- transmit to the new printed circuit board 30 the identifiers of the acquisition devices 40 and/or of the actuation devices 50 received from the mapping module for mapping printed circuit boards 118.

The technical effect achieved is a precise addressing of the new printed circuit boards, replacing the damaged printed circuit boards that also contemplates information on the control and actuation devices connected thereto.

Advantageously, the system 1 described herein achieves the set objects by overcoming the drawbacks complained of in the prior art, enabling the overall cost to be reduced both in terms of the life of the materials and the time necessary for work to install the materials.

In fact the remote location of the printed circuit boards 30 permits in particular significant savings from the point of view of wiring necessary for interconnecting all the distinct elements that make up the system 1.

## Claims

1. An alarm detection and protection system comprising:
- a processing station (10) comprising a control unit (11);
- one or more printed circuit boards (30) controlled by said control unit (11);
- a detection station (20) that is remote with respect to the processing station (10) and comprising at least one acquisition device (40) and an actuation device (50), said acquisition device and actuation device (50) being connected to the control unit (11) by at least one of said one or more printed circuit boards (30); said control unit (11) being configured to:
- receive detection data (Din) from said at least one acquisition device (40) through said one of said one or more printed circuit boards (30);
- process actuation data (Dout) as a function of said detection data (Din) received;
- transmit actuation data (Dout) to said at least one acquisition device (50) through said one of said one or more printed circuit boards (30);
wherein at least one of said one or more printed circuit boards (30) is installed at the detection station (20).

2. The system according to claim 1, wherein the at least one printed circuit board (30) installed at the detection station (20) is integrated into said detection station (20)

3. The system according to claim 2, wherein each printed circuit board (30) is installed at the detection station (20).

4. The system according to claim 3, wherein said detection station (20) comprises a cabinet provided with a plurality of housings for said one or more printed circuit boards (30).

5. The system according to any one of the preceding claims wherein the at least one printed circuit board (30) is connected to the processing station (10) and to the detection station (20) by respective communication channels, said communication channels being preferably redundant.

6. The system according to claim 5, wherein said communication channels are made by an optic fibre communication line and/or at least one BUS communication line of CAN type.

7. The system according to any one of the preceding claims, comprising a plurality of printed circuit boards (30), wherein at least one printed circuit board (30) is installed at the processing station (10), preferably said processing station (10) comprising at least one acquisition device (40) and an actuation device (50) that are connected to the control unit (11) by the printed circuit board (30) installed at the processing station (10).

8. The system according to any one of the preceding claims wherein the processing station (10) and/or the detection station (20) comprise a display (17) for a communication with a system operator.

9. The system according to any one of the preceding claims, comprising a plurality of detection stations (20), each detection station (20) being associated with at least one respective printed circuit board (30), wherein at least one printed circuit board (30) associated with a detection station (20) is connected to at least one printed circuit board (30) associated with a further detection station (20).

10. The system according to any one of the preceding claims wherein said central control unit (11) comprises:
- a memory module (13) comprising parameters (P1) that are representative of detectable faults;
- an intervention module (14) configured to:
- receive the detection data (Din) of a detected fault;
- compare said detection data (Din) with said parameters (P1) that are representative of detectable faults;
- transmit actuation data (Dout) determined as a function of said comparison.
